# EUROPÄISCHE PATENTSCHRIFT

(11) **EP 1 975 093 B1**
(45) Veröffentlichungstag und Bekanntmachung des Hinweises auf die Patenterteilung: **23.06.2010**
(21) Anmeldenummer: 08005879.5
(22) Anmeldetag: 27.03.2008
(51) Int. Cl.: B65G 17/08, B65G 17/38, B65G 17/40

(54) **Seitenbogenförderkette mit Innen- und Außenkettengliedern**
Side-flexing conveyor chain with interior and exterior chain links
Chaîne d'alimentation à flexion latérale dotée d'articulations extérieures et intérieures

(30) Priorität: 29.03.2007 DE 102007015276
(43) Veröffentlichungstag der Anmeldung: 01.10.2008
(73) Patentinhaber: iwis antriebssysteme GmbH & Co. KG, 81369 München (DE)
(72) Erfinder: Mitzschke, Franz, 09113 Chemnitz (DE); Sumpf, Jens, 09366 Stollberg (DE); Nendel, Klaus, 09569 Oederan (DE); Janzen, Wolfgang, 57234 Winsdorf (DE); Eichhorn, Sven, 08606 Mühlental (DE)
(74) Vertreter: Grünecker, Kinkeldey, Stockmair & Schwanhäusser Anwaltssozietät

(56) Entgegenhaltungen:
- DE-A1- 10 151 863
- GB-A- 2 123 518
- US-A- 4 422 544

## Beschreibung

Die vorliegende Erfindung betrifft eine Seitenbogenförderkette, deren Kettenglieder jeweils mittels eines um eine erste und eine zweite Achse schwenkbaren Kettengelenks miteinander verbunden sind, das einen entlang der ersten Achse angeordneten Gelenkbolzen, einen entlang der zweiten Achse angeordneten Gelenkzapfen, durch den sich der Gelenkbolzen erstreckt, und eine entlang der zweiten Achse angeordnete Aufnahmehülse, in der der Gelenkzapfen relativ zur Aufnahmehülse um die zweite Achse schwenkbar angeordnet ist, umfasst, wobei die Aufnahmehülse seitliche Schwenköffnungen zum Durchtritt des Gelenkbolzens aufweist.

Eine solche Kette ist z.B. aus der DE 10151863 sowie der DE 10207687 bekannt. Die erste uns zweite Achse dieser Ketten stehen senkrecht aufeinander, so dass eine Art Kardangelenkverbindung zwischen den Kettengliedern vorhanden ist. Mit den einzelnen Kettengliedern ist jeweils eine Tragplatte verbunden, so dass sich insgesamt ein Plattenband ergibt. Führungsflächen an den Kettengliedern sorgen zusammen mit Führungsschienen dafür, dass das Plattenband möglichst horizontal ausgerichtet ist. Aufgrund der Gelenkausgestaltung kann die Kette einen Seitenbogen fahren und auch in diesem Bereich auf dem Plattenband angeordnete Güter weitertransportieren. Die Kettenglieder sind alle gleich ausgestaltet. Sie weisen am vorderen Ende einen Gelenkkopf auf, der von dem hinteren Gabelende des vorangegangenen Kettengliedes seitlich umgriffen wird. Diese Ausgestaltung ist zwar fertigungstechnisch günstig, weist jedoch Nachteile hinsichtlich der Festigkeit auf.

Eine Sonderkonstruktion mit horizontalen und vertikalen Laschenpaaren ist aus der GB 2123518 A bekannt. Aufgrund der sowohl horizontal als auch vertikal angeordneten Laufrollen eignet sich eine solche Konstruktion nicht für alle gängigen Förderkettentypen wie z.B. eine Plattenbandkette.

Eine weitere Förderkette ist aus der US 4422544 bekannt.

Es ist daher die Aufgabe der vorliegenden Erfindung, eine Seitenbogenförderkette der eingangs genannten Art hinsichtlich ihrer Festigkeitseigenschaften zu verbessern.

Diese Aufgabe wird erfindungsgemäß dadurch gelöst, dass sich abwechselnde Innen- und Außenkettenglieder vorgesehen sind, ein Innenkettenglied jeweils an seinen beiden Enden eine Aufnahmehülse und mindestens eine diese miteinander verbindende Innenlasche aufweist, ein Außenkettenglied jeweils an seinen beiden Enden einen Gelenkbolzen und einen Gelenkzapfen und mindestens zwei diese miteinander verbindende Außenlaschen aufweist, die mindestens zwei Außenlaschen an ihren Stirnenden jeweils eine Aufnahmehülse eines benachbarten Innenkettengliedes seitlich umfassen und die hochkant ausgerichteten Innen- und Außenlaschen beim Geradeauslauf der Kette senkrecht zu der ersten Achse angeordnet sind.

Auf den ersten Blick erscheint eine solche Konstruktion ein Rückschritt zu sein, da sie einen höheren Teileaufwand erfordert. Hinsichtlich der Festigkeit und Verwindungssteifigkeit der einzelnen Kettenglieder der Kette ergeben sich jedoch beachtliche Vorteile. Insbesondere die im Stand der Technik verwendete gekröpfte Gabelform ist aus Festigkeitsgründen ungünstig, was sich insbesondere bei Verwendung von Kunststoffmaterialien mit einem größeren Materialaufwand bemerkbar macht. Die vorliegende Erfindung bedient sich eines vollständig neu konstruierten Innenkettengliedes, das an den beiden Enden jeweils eine Aufnahmehülse aufweist. Die Krafteinleitung ist daher in diesen beiden Endbereichen nahezu identisch und die Zugkräfte können durch einfach ausgestaltete Innenlaschen (bevorzugt nicht gekröpft) übertragen werden. Zwar sind Laschenketten mit Außen- und Innenkettengliedern weit verbreitet im Einsatz. Jedoch erfordert die Verwendung des zweiachsigen Kettengelenks eine mit Gelenkbolzen, Gelenkzapfen und Aufnahmehülsen eine vollkommene Neukonstruktion, die in ihrer Gesamtkombination zusätzliche Festigkeitsvorteile bietet. Obwohl die Kette mit einem in zwei Achsen verschwenkbaren Gelenk ausgestattet ist, sind sämtliche Laschen in gleicher hochkanter Ausrichtung angeordnet. Eine Lasche ist meist ein plattenförmiges Gebilde. Der Begriff "hochkant" bedeutet in dem Zusammenhang, dass die Lasche auf ihrer Schmalseite steht und die größeren Seitenflächen senkrecht zur ersten Achse angeordnet sind. Hierdurch wird eine eindeutige Vorzugsrichtung und eine möglichst gleichbleibende Stabilität über die gesamte Länge erzielt.

Gemäß einer weiteren Ausgestaltung können zumindest die Innenlaschen und die Außenlaschen der Innen- und Außenkettenglieder aus einem Kunststoffmaterial, bevorzugt hochfesten Kunststoffmaterial, hergestellt sein. Aufgrund der geraden Kraftdurchleitung lässt sich eine Seitenbogenförderkette mit möglichst geringem Gewicht herstellen. In diesem Zusammenhang ist es weiter günstig, wenn die mindestens eine Innenlasche und die beiden Aufnahmehülsen eines Innenkettengliedes einteilig aus einem Kunststoffmaterial hergestellt sind. Die Herstellung des relativ kompliziert geformten Innenkettengliedes lässt sich durch diese Maßnahme sehr vereinfachen. Insbesondere die Anbindung der Innenlaschen an die Hülse können entsprechend hinsichtlich vorteilhafter Festigkeitseigenschaften optimiert werden.

Bevorzugterweise können die Gelenkzapfen eine untere Stirnfläche der Aufnahmehülsen überragen. Hierdurch lassen sich die überstehenden Endabschnitte der Gelenkzapfen zur Führung während des Seitenbogens der Kette heranziehen. Ein geeignet geformtes Kettenrad greift in die Zwischenräume der Gelenkzapfen ein und führt die Kette entlang des Seitenbogens. Hierbei können sich zusätzliche Flächen der Kette an dem Kettenrad oder einer Führungsstruktur abstützen. Das Kettenrad kann auch zum Antrieb der Kette herangezogen werden.

Damit sich möglichst kein Schmutz im Bereich der Kette, die auch im Lebensmittelbereich eingesetzt wird, ansammeln kann, können die Aufnahmehülsen am oberen Ende geschlossen und somit topfförmig ausgebildet sein. Durch das geschlossene Ende lässt sich auch im Inneren der Aufnahmehülse eine Anschlagfläche ausbilden, die eine Montageerleichterung darstellt, z.B. wenn der Gelenkbolzen durch die Gelenkzapfen geschoben wird.

Damit der Seitenbogenförderkette trotz der Verwendung von Innen- und Außenkettengliedern eine möglichst gute Seitenbogenbeweglichkeit zuteil wird, kann gemäß einer weiteren Ausführungsform vorgesehen sein, dass die Außenlaschen auf ihrer Innenseite eine dem Gelenkbolzen zumindest bereichsweise umgebende Zentriererhöhung aufweisen, wobei der Abstand zweier gegenüberliegender Zentriererhöhungen im Wesentlichen dem Durchmesser der dazwischen angeordneten Aufnahmehülse entspricht. Selbstverständlich ist der Abstand so gewählt, dass sich die Aufnahmehülse zwischen den beiden Zentriererhöhungen verschwenken lässt. Das Spiel ist allerdings nur so groß, dass keine zusätzliche Instabilitätskomponente hinzu kommt. Hierdurch baut das Innenkettenglied an dieser Stelle etwas schmaler, ist aber dennoch durch die Zentriererhöhungen in seiner Lage geführt.

Vorteilhafterweise kann eine Längsmittellinie der Zentriererhöhung in einer Ebene verlaufen, die im Wesentlichen senkrecht zu einer Längsmittellinie des Außenkettengliedes ausgerichtet ist und durch die die erste Achse verläuft, wobei die Zentriererhöhungen sich über mindestens 50 % der Laschenhöhe der Innenlasche erstrecken. Insbesondere beim Durchfahren eines Seitenbogens und bei ansonsten geradliniger Ausrichtung der Kettenglieder zueinander ist bei einer solchen Ausgestaltung das Innenkettenglied zumindest zu 50 % seiner Höhe durch die Zentriererhöhung geführt, wodurch auch Momente um die Längsmittellinie von der Zentrierung mit aufgenommen werden.

Des Weiteren kann eine Außenfläche der mindestens einen Innenlasche eines Innenkettengliedes im Wesentlichen tangential zur Außenmantelfläche der Aufnahmehülse ausgerichtet sein, wobei im Übergangsbereich zwischen Innenlasche und Aufnahmehülse eine Längsnut vorgesehen ist, die im Wesentlichen senkrecht zu der ersten Achse und einer Längsachse des Innenkettengliedes verläuft und einen dem Querschnitt der Zentriererhöhung angepassten Nutquerschnitt aufweist. Hierdurch stößt die Zentriererhöhung nicht unmittelbar mit einem scharfen Übergangsbereich zwischen Innenlasche und Aufnahmehülse als Anschlagfläche zusammen, sondern die Kette ist in der Lage, einen noch engeren Seitenbogen zu durchfahren, weil die Nut ein weiters Einschwenken der Zentriererhöhung in den Übergangsbereich zulässt.

Eine weitere Möglichkeit, einen engeren Seitenbogen zu durchfahren besteht darin, dass ein Abstand einer Außenfläche der mindestens einen Innenlasche eines Innenkettengliedes zur Längsmittellinie des Innenkettengliedes kleiner ist als die halbe Breite der Aufnahmehülse. Durch die gegenüber der Aufnahmehülse zurückversetzte Innenlasche kann die Zentriererhöhung weiter um die Aufnahmehülse geschwenkt werden.

Eine weitere Maßnahme zur Erzielung eines kleineren Seitenbogens besteht bei einer Variante darin, dass sich der Abstand der Innenflächen der mindestens zwei Außenlaschen zwischen dem Gelenkbolzen und dem Stirnendbereich der Außenlaschen fortlaufend vergrößert. In der Draufsicht entsteht eine Art Trichter, wodurch der Stirnendbereich der Außenlaschen nicht so schnell mit den Seitenflächen der Innenlaschen in Berührung kommt. Hierbei hat sich als vorteilhaft herausgestellt, wenn sich die beiden Innenflächenabschnitte an den Stirnendbereichen der mindestens zwei Außenlaschen in einem Winkelbereich von 15° bis 45° zueinander öffnen. Üblicherweise sind die Außenlaschen von Außenkettengliedern lediglich durch die Gelenkbolzen miteinander verbunden. Gemäß einer Ausführungsform der vorliegenden Erfindung ist jedoch vorgesehen, dass die mindestens zwei Außenlaschen des Außenkettengliedes mittels mindestens einem zwischen den Aufnahmehülsen benachbarter Innenkettenglieder verlaufenden Quersteg verbunden sind. Hierdurch erhält das Außenkettenglied eine zusätzlich stabilisierende Komponente, die sich insbesondere vorteilhaft beim Durchfahren des Seitenbogens bemerkbar macht. Solch ein oder mehrere Quersteg(e) lässt oder lassen sich insbesondere bei einer Kunststoffvariante sehr einfach einteilig mit den Außenlaschen herstellen.

Vorteilhafterweise können mehrere Querstege vorgesehen sein, die die Stirnendbereiche der benachbarten Innenkettenglieder zumindest teilweise umfassen und somit Aufnahmebuchten für die Aufnahmehülse formen. Das bedeutet aber auch, dass die Querstege möglichst nahe am Gelenkbolzen mit den Außenlaschen verbunden sind, aber aufgrund ihrer eine Aufnahmebucht bereitstellenden Form entsprechend in der Mitte des Außenkettengliedes zusammenlaufen. Die Aufnahmehülsen lassen sich in diesen Aufnahmebuchten ohne Behinderung durch die Querstege um die zweite Achse schwenken. Die Aufnahmebuchten können dabei so ausgeformt sein, dass sie unter Einhaltung eines möglichst kleinen Spiels im Wesentlichen formgenau an die Aufnahmehülsen angepasst sind. Andererseits können die Querstege auch jeweils gerade Abschnitte bilden, die möglichst nahe an die Aufnahmehülse herangeführt sind.

Um die Festigkeit der Verbindung zwischen den Gelenkbolzen und der Außenlasche zu erhöhen, können gemäß einer weiteren Ausführungsform die Außenlachen an den Außenseiten vorstehende hülsenförmige Vorsprünge zum Aufnehmen der Gelenkbolzenenden aufweisen. Eine solche Befestigung der Gelenkbolzen in den Außenlaschen eignet sich insbesondere bei Kunststoffausgestaltungen der Außenlaschen, wobei die Gelenkbolzen aus Stahl bestehen.

Ungeachtet etwaig vorhandener hülsenförmiger Vorsprünge können die Endabschnitte der Außenlaschen zumindest im Bereich der Gelenkbolzen verstärkt ausgebildet sein. Es handelt sich hierbei um die Zone größter Belastung in den Außenlaschen, weshalb diese Verstärkung durchaus Sinn ergibt. Bei Kunststoffaußenlaschen lässt sich eine solche Verstärkung sehr einfach erzielen, die bei Stahllaschen im Stand der Technik eher unüblich ist.

Damit auch das Innenkettenglied möglichst an in der Kette auftretende Zugbelastungen angepasst ist, können die Aufnahmehülsen in einer Ebene, die senkrecht zur Längsmittellinie des Innenkettengliedes und längs der zweiten Achse verläuft, eine größere Wandstärke aufweisen als um 90° um die zweite Achse gedreht dazu. Eine verringerte Wandstärke am Kopfende des Innenkettengliedes sorgt für eine größere Beweglichkeit beim Verschwenken der Aufnahmehülse um die erste Achse. Senkrecht hierzu ist jedoch dann die Wandstärke zum Erhalten der gewünschten Festigkeit entsprechend ausreichend dick.

Eine erfindungsgemäße Seitenbogenförderkette eignet sich insbesondere als Plattenbandkette. Hierzu ist vorgesehen, dass ein Plattenband aus einzelnen Tragplatten vorhanden ist und die Tragplatten mit den Außen- und/oder Innenkettengliedern verbunden sind. Hier bieten sich einstückig feste Verbindungen oder lösbare Verbindungen an. Die Tragplatten können demnach mittels Rasteinrichtungen mit den Außen- und/oder Innenkettengliedern verbunden sein. Bei lösbaren Ausführungen können die Tragplatten bei Beschädigung ausgetauscht werden. Auch die Montage lässt sich hierdurch vereinfachen.

Damit möglichst geringe Lücken zwischen den einzelnen Tragplatten entstehen, die den Transport, insbesondere kleinerer Gegenstände beeinträchtigen könnten, können die Tragplatten vorteilhafterweise verzahnt ineinander greifen. Dabei ist vorteilhafterweise die Kontur einer Tragplatte im Wesentlichen punktsymmetrisch ausgestaltet. Hierdurch muss nur eine einzige Tragplattenform verwendet werden, um dennoch eine ineinander greifende Verzahnung zu erhalten, wodurch die Teilevielfalt verringert ist.

Zur weiteren Stabilisierung der Tragplatten kann bei einer weiteren Ausführungsform vorgesehen sein, dass die Innenkettenglieder und/oder die Außenkettenglieder eine Steckaufnahme aufweisen, in die jeweils ein Steckvorsprung einer zugehörigen Tragplatte formschlüssig eingreift und mittels der zusätzlichen Rasteinrichtungen gesichert ist.

Im Folgenden werden Ausführungsformen der vorliegenden Erfindung anhand einer Zeichnung näher erläutert. Es zeigen:
- Fig. 1: eine perspektivische Seitenansicht einer ersten Seitenbogenförderkette,
- Fig. 2: die Seitenbogenförderkette aus Fig. 1 in einer Seitenansicht,
- Fig. 3: eine vergrößerte perspektivische Draufsicht eines Außenkettengliedes der Kette aus Fig. 1,
- Fig. 4: eine perspektivische Unteransicht des Außenkettengliedes aus Fig. 3,
- Fig. 5: eine Unteransicht des Außenkettengliedes aus Fig. 3,
- Fig. 6: eine vergrößerte perspektivische Draufsicht eines Innenkettengliedes der Kette aus Fig. 1,
- Fig. 7: eine Unteransicht des Innenkettengliedes aus Fig. 6,
- Fig. 8: eine Schnittdarstellung des Kettengelenks aus Fig. 2 entlang der Linie VIII-VIII geschnitten,
- Fig. 9: das Kettengelenk aus Fig. 8 in einer um 90° gedrehten Schnittdarstellung,
- Fig. 10: eine Unteransicht der Seitenbogenförderkette aus Fig. 1, wobei aus Vereinfachungsgründen die Tragplatten weggelassen wurden,
- Fig. 11: eine vergrößerte perspektivische Unteransicht einer Tragplatte zur Verbindung mit einem Innenkettenglied,
- Fig. 12: eine vergrößerte perspektivische Ansicht einer Tragplatte zur Verbindung mit einem Außenkettenglied,
- Fig. 13: eine perspektivische Seitenansicht einer zweiten Ausführungsform einer Seitenbogenförderkette,
- Fig. 14: eine perspektivische Seitenansicht des Innenkettengliedes aus Fig. 13,
- Fig. 15: eine Tragplatte zum Verbinden mit dem Innenkettenglied aus Fig. 14 und dem Außenkettenglied aus Fig. 13,
- Fig. 16: eine dritte Ausführungsform einer Seitenbogenförderkette im perspektivischen Vollschnitt,
- Fig. 17: die Seitenbogenförderkette aus Fig. 16 in einer perspektivischen Draufsicht,
- Fig. 18: eine vergrößerte perspektivische Darstellung eines Innenkettengliedes aus Fig. 16 mit angebrachter Tragplatte,
- Fig. 19: eine vergrößerte perspektivische Ansicht eines Außenkettengliedes aus Fig. 16 mit angeordneter Tragplatte und
- Fig. 20: eine Draufsicht einer Variante einer Tragplatte in asymmetrischer Ausführung.

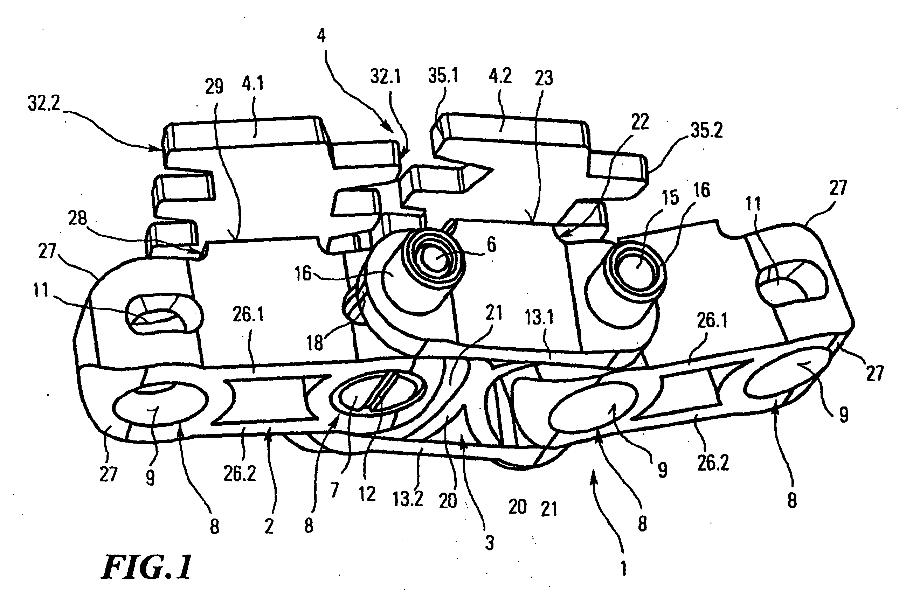

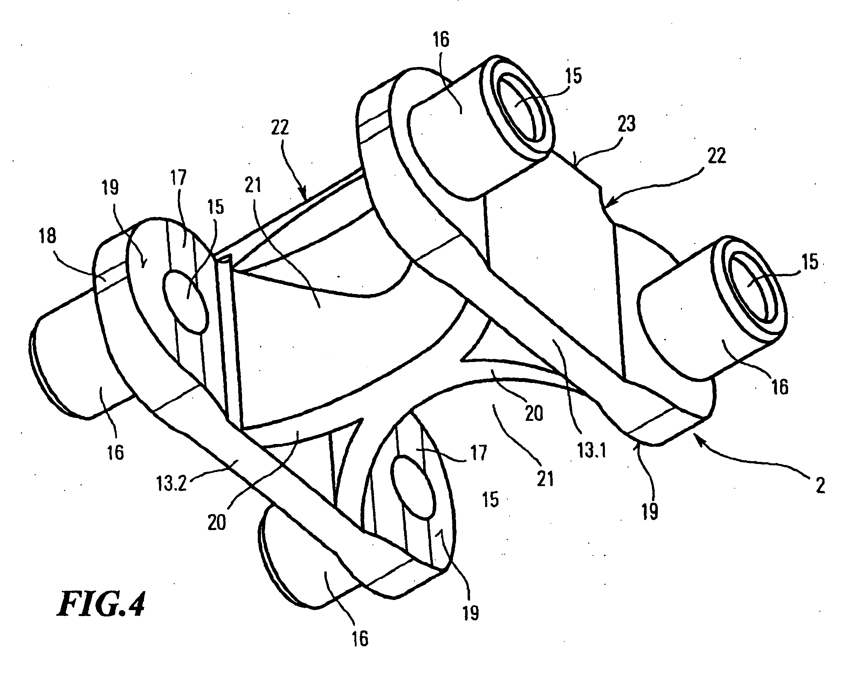

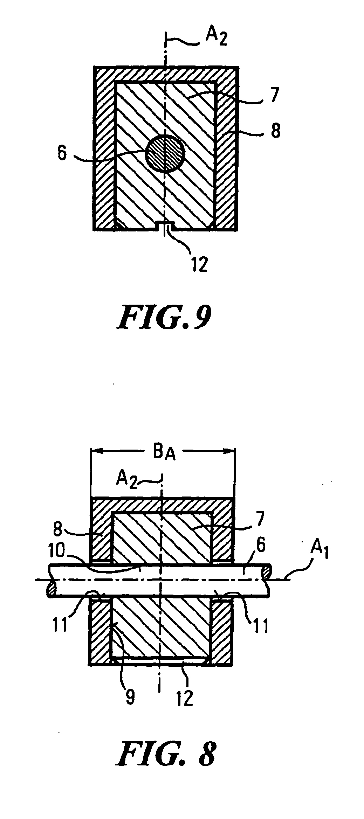

Anhand der Fig. 1 bis 12 wird nunmehr eine erste Ausführungsform einer erfindungsgemäßen Seitenbogenförderkette 1 (im Folgenden: Kette) näher erläutert. Die Kette 1 umfasst sich abwechselnde Innenkettenglieder 2 und Außenkettenglieder 3 sowie ein auf den Kettengliedern 2 und 3 angeordnetes und von einzelnen Tragplatten 4.1 und 4.2 gebildetes Plattenband 4. Die Verbindung eines Innenkettengliedes 2 und eines Außenkettengliedes 3 erfolgt über ein Kettengelenk 5, das sowohl um eine erste (in Fig. 8 horizontale) Achse A₁ als auch um eine zweite (in Fig. 8 vertikale) Achse A₂ schwenkbar ausgebildet ist. Jedes Kettengelenk 5 umfasst einen Gelenkbolzen 6 und einen zylindrischen Gelenkzapfen 7 sowie eine sowohl den Gelenkzapfen 7 als auch den Gelenkbolzen 6 aufnehmende Aufnahmehülse 8, die als Bestandteil des Innenkettengliedes 2 ausgebildet ist. Der Gelenkzapfen 7 ist in einer Grundbohrung 9 der Aufnahmehülse 8 um die Achse A₂ schwenkbar angeordnet. Der Gelenkzapfen 7 ist mit einer quer durch diesen verlaufenden Bohrung 10 versehen, in die der Gelenkbolzen 6 eingesteckt ist. Damit der Gelenkbolzen 6 seitlich aus der Aufnahmehülse 8 hinaus treten kann, weist diese seitliche, langlochförmige Schwenköffnungen 11 auf. Die Aufnahmehülse 8 ist am oberen Ende verschlossen. Der Gelenkzapfen 7 weist an seinem unteren Ende einen Schlitz 12 auf, der zur Montageausrichtung dient. Die Achsen A₁ und A₂ stehen im Wesentlichen senkrecht aufeinander. Allerdings ist auch ein Versatz von bis zu 10 % der Kettenteilung möglich.

Die Enden des Gelenkbolzens 6 sind jeweils mit dem Außenkettenglied 3 verbunden. Durch diese Ausgestaltung des Kettengelenks 5 lässt sich die Kette 1 in zwei Richtungen verschwenken, so dass sie nicht nur in üblicher Weise mittels eines Kettenrads (nicht dargestellt) angetrieben werden, sondern auch einen Seitenbogen ausführen kann.

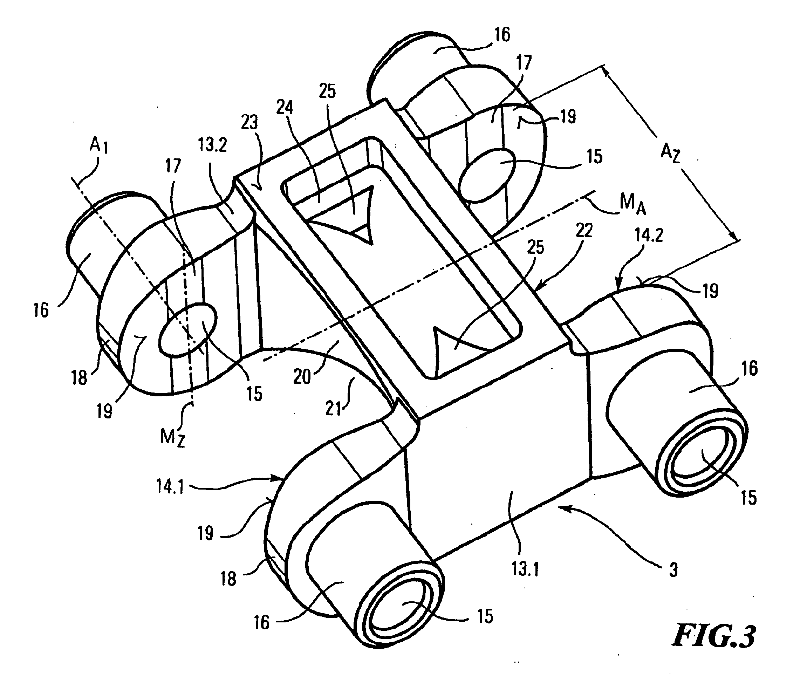

Anhand der Fig. 3 bis 5 wird nunmehr der Aufbau des Außenkettengliedes 3 näher erläutert.

Das Außenkettenglied 3 weist zwei parallel zueinander angeordnete, hochkant stehende Außenlaschen 13.1 und 13.2 auf. Die Endabschnitte 14.1 und 14.2 der Außenlaschen 13.1 und 13.2 sind zumindest im Bereich ihrer Öffnungen 15 verdickt ausgeführt. Darüber hinaus weisen diese Endabschnitte 14.1 und 14.2 an ihren Außenseiten hülsenförmige Vorsprünge 16 auf, in denen jeweils die Bohrung 15 weitergeführt ist. Die Bohrung 15 und somit auch die hülsenförmigen Vorsprünge 16 dienen zur Aufnahme der Endbereiche der Gelenkbolzen 6. Ein nicht näher dargestelltes Antriebskettenrad greift mit seinen Zähnen in die Lücken zwischen den hülsenförmigen Vorsprüngen 16 beim Umlenken um die erste Achse A₁ ein. Die Anzahl der Lücken auf jeder Seite entspricht der Anzahl der gesamten Kettenglieder.

Auf ihren Innenseiten der Endabschnitte 14.1 und 14.2 weisen die Außenlaschen 13.1 und 13.2 jeweils einen Zentriervorsprung 17 (Zentriererhöhung) auf, der eine seitliche Führung für die Aufnahmehülse 8 darstellt. Zum Stirnende 18 hin, nimmt die Dicke der Außenlaschen 13.1 und 13.2 hin wieder ab. Insbesondere auf der Innenseite der Endabschnitte 4.1 und 4.2 sind Trichterflächen 19 gebildet, die gemeinsam symmetrisch zu einer Längsmittellinie M_{A} des Außenkettengliedes 3 einen Öffnungswinkel α von ca. 36° (zwischen 15° und 45°) einschließen. Der Scheitelpunkt des Winkels α liegt auf der Achse A₁ des benachbarten Kettengelenks 5 am gleichen Außenkettenglied 3. Der Zentriervorsprung 17 erstreckt sich über die gesamte Höhe des Endabschnitts 14.1 und 14.2 (also mehr als 50 % der Höhe des Endabschnittes). Demnach verläuft eine Längsmittellinie M_{Z} des Zentriervorsprungs 17 in einer Ebene, die im wesentlichen senkrecht zu der Längsmittelachse M_{A} ausgerichtet ist und durch die die erste Achse A₁ verläuft.

Die beiden plattenförmigen Außenlaschen 13.1 und 13.2 sind mittels bogenförmig verlaufender Querstege miteinander verbunden. Im vorliegenden Fall sind zwei Querstege 20 vorhanden. Aufgrund der Bogenform sind die mit den Außenlaschen 13.1 und 13.2 verbundenen Endbereiche der Querstege 20 möglichst nahe an die Endabschnitte 14.1 und 14.2 herangezogen, während diese im mittleren Abschnitt zusammenlaufen. Hierdurch sind Aufnahmebuchten 21 ausgeformt, die zur möglichst formgenauen Aufnahme der Aufnahmehülsen 8 dienen. Auf der Oberseite des Außenkettengliedes 3 ist eine nach oben überstehende Deckplatte 22 vorgesehen. Die Auflageseite 23 der Deckplatte 22 dient zum Aufliegen der Unterseite der zugehörigen Tragplatte 4.2. In der Deckplatte 22 ist eine rechteckförmige Steckaufnahme 24 eingeformt, die an ihrem Grund dreiecksförmige Rastöffnungen 25 aufweist.

Das gesamte Außenkettenglied 3 besteht aus einem verstärkten Kunststoffmaterial und ist einteilig durch ein entsprechendes Formgebungsverfahren, bevorzugt Spritzgießen, hergestellt.

Der Abstand A_{Z} zweier gegenüberliegender Zentriervorsprünge 17 entspricht im wesentlichen der Breite B_{A} (siehe Fig. 8) der Aufnahmehülse 8.

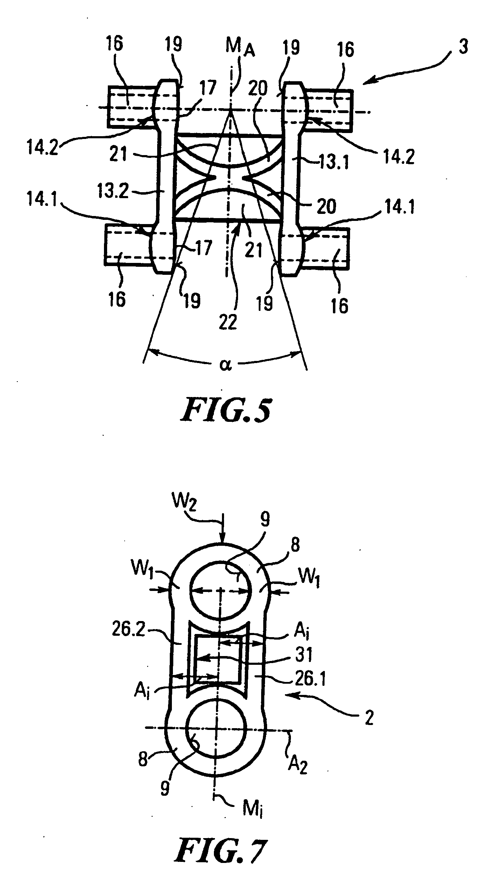

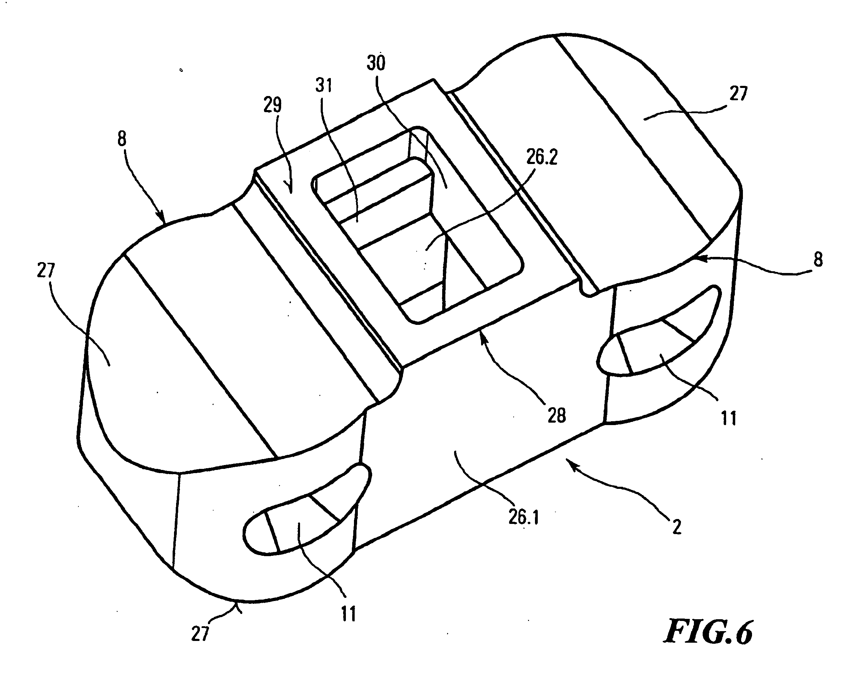

Anhand der Fig. 6 und 7 wird nunmehr der Aufbau des Innenkettenglieds 2 näher erläutert.

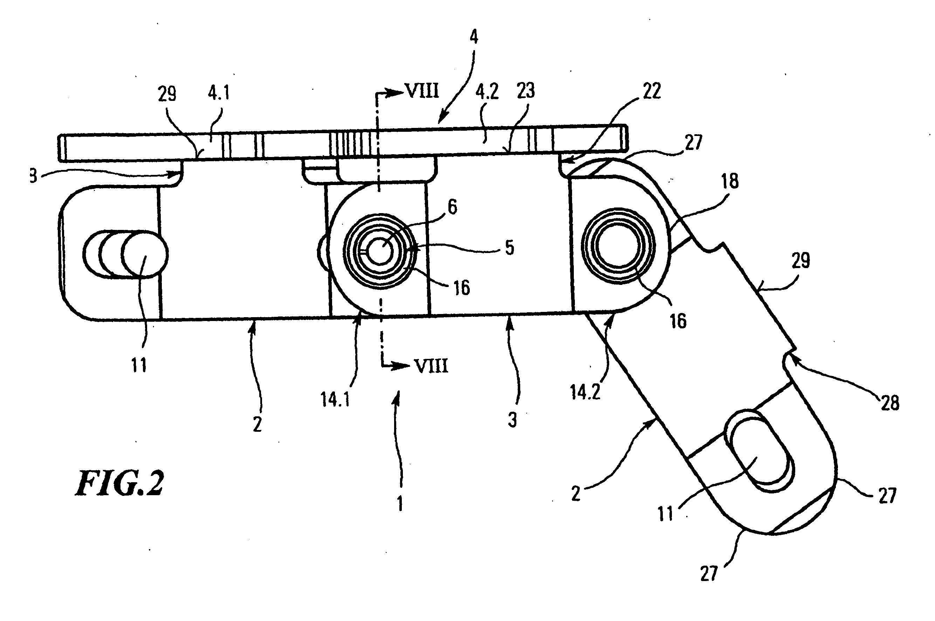

Das Innenkettenglied 2 weist zwei parallel zueinander im Abstand verlaufende, hochkant stehende Innenlaschen 26.1 und 26.2 auf. Die Innenlaschen 26.1. und 26.2 gehen an ihren Endbereichen formschlüssig in die Aufnahmehülsen 8 über und verbinden die zwei Aufnahmehülsen 8 eines Innenkettengliedes 2 miteinander. Dabei ist der Abstand Aᵢ einer Au-ßenfläche der Innenlachen 26.1 oder 26.2 zur Längsmittellinie Mᵢ kleiner als die Breite B_{A} der Aufnahmehülse 8, wodurch die Innenlaschen 26.1 und 26.2 gegenüber der Aufnahmehülse 8 etwas nach innen versetzt sind. Durch die Verwendung von unterschiedlichen Radien mit unterschiedlichen Mittelpunkten wird erreicht, dass die Wandstärke W₁ größer ist als die um 90° versetzte Wandstärke W₂. Hierdurch werden zwei Effekte erzielt. Zum einen liegt die dickere Wandstärke W₁ in der Zone der größten Spannung und verstärkt somit die Aufnahmehülse 8. Zum anderen wird durch die verringerte Wandstärke W₂ Platz gewonnen für das Verschwenken der Aufnahmehülse 8 um die zweite Achse A₂ innerhalb einer Aufnahmebucht 21. Zusätzlich ist die Aufnahmehülse 8 noch an ihrer Ober- und Unterseite entsprechend abgerundet. Wie sich aus Fig. 2 ersehen lässt, kann aufgrund dieser Abrundung 27 der Endbereich des Innenkettengliedes 2 unterhalb der Tragplatte 4.2, ohne an dieses anzustoßen, um die Achse A₁ verschwenkt werden (siehe Fig. 2).

Das Innenkettenglied 2 weist an seiner Oberseite eine Deckplatte 28 auf, deren nach oben weisende Auflageseite 29 mit der Unterseite einer zugehörigen Tragplatte 4.1 in Berührung kommt. Hierzu ist in der Deckplatte 28 eine Steckaufnahme 30 vorgesehen, in der ei auf beiden gegenüberliegenden Seiten Rastvorsprünge 31 vorgesehen sind.

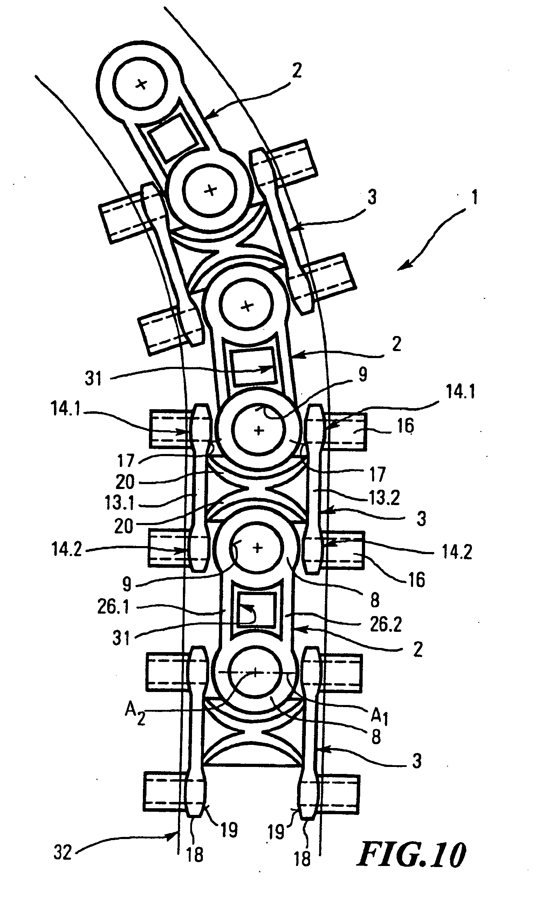

Insbesondere anhand der Fig. 10 ist von unten zu erkennen, wie die Innen- und Außenkettenglieder 2,3 bei einer Seitenbogenfahrt zusammenwirken. Die Gelenkbolzen 6 und Gelenkzapfen 7 sind aus Vereinfachungsgründen nicht eingezeichnet. Hierzu kann eine Führungsbahn 32 vorgesehen sein, die die Außenlaschen 13.1 und 13.2 seitlich führt. Auf der Führungsbahn liegen dann die durch den Endbereich der Gelenkbolzen 6 verstärkten hülsenförmigen Vorsprünge 16 auf. Im oberen Bereich ist insbesondere zu erkennen, wie sich das Innenkettenglied 2 relativ zum Außenkettenglied 3 um die zweite Achse A₂ verschwenken lässt. Durch die zurückversetzten Innenlaschen 26.1 und 26.2 und die Trichterflächen 19 lässt sich der Schwenkbereich wie dargestellt erweitern. Hierdurch müssen trotz der Verwendung von Innenkettengliedern 2 und Außengliedern 3 keine Einbußen hinsichtlich des Radius des Seitenbogens gegenüber bislang verwendeten Ausgestaltungen in Kauf genommen werden.

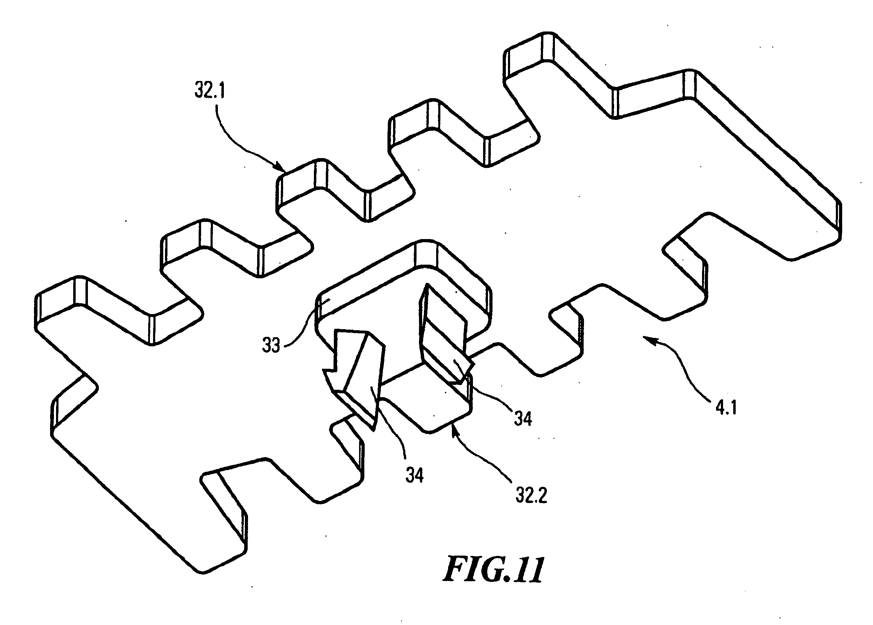

In Fig. 11 ist eine Tragplatte 4.1 für ein Innenkettenglied dargestellt. Die Tragplatte 4.1 weist sowohl an ihrer Vorderkante eine Verzahnung 32.1 als auch an ihrer hinteren Kante eine komplementäre Verzahnung 32.2 auf. Der Verschwenkung um die Achse A₂ wird durch eine Bogenform im Zahngrund der Verzahnungen 32.1 und 32.2 Rechnung getragen. Währen die Oberseite der Tragplatte 4.1 plan ist, weist die Unterseite einen Steckvorsprung 33 auf, der passgenau in die Steckaufnahme 30 einsteckbar ist. An der Unterseite des Steckvorsprungs 33 stehen zwei federnd ausgestaltete Rasthaken 34 vor. Diese Rasthaken 34 lassen sich über die Rastvorsprünge 31 am Grund der Steckaufnahme 30 schieben und an deren Unterseite verrasten.

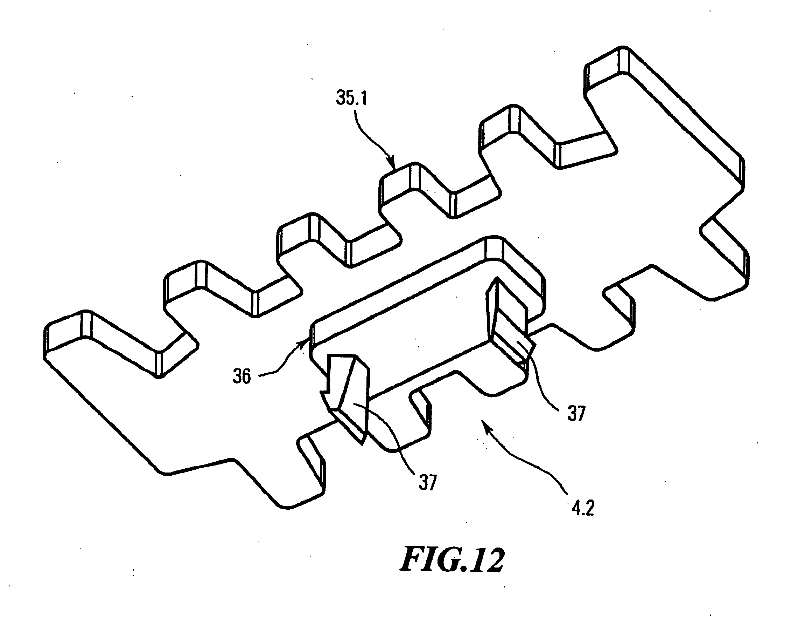

In ähnlicher Weise ist die in Fig. 12 dargestellte Tragplatte 4.2 für ein Außenkettenglied 3 aufgebaut. Diese weist eine Verzahnung 35.1 and er Vorderkante und eine komplementäre Verzahnung 35.2 an der hinteren Kante auf. Für die Schwenkbewegung um die Achse A₂ sind die Verzahnungen 35.1 und 35.2 entsprechend bogenförmig im Zahngrund ausgestaltet. Auch hier ist die Oberseite der Tragplatte 4.2 eben, während auf der Unterseite ein Steckvorsprung 36 mit nach unten vorstehenden Rasthaken 37 vorhanden ist. Der Steckvorsprung 36 lässt sich passgenau in die Steckaufnahme 24 im Außenkettenglied 3 einführen, während die Rasthaken 37 in die Rastöffnungen 25 eintauchen und an deren Unterkante verrasten.

Das Innenkettenglied 2 besteht vollständig aus einem verstärkten Kunststoffmaterial und lässt sich sehr einfach durch entsprechende Formgebungsverfahren, insbesondere Spritzgießen, herstellen.

Beim Geradeauslauf der Kette 1 sind die hochkant ausgerichteten Innen- und Außenlaschen 26.1, 26.2; 13.2,13.2 senkrecht zu der ersten Achse A₁ angeordnet, d.h. sämtliche Laschen sind vertikal angeordnet, wenn die Kette im Geradeauslauf sich horizontal bewegt.

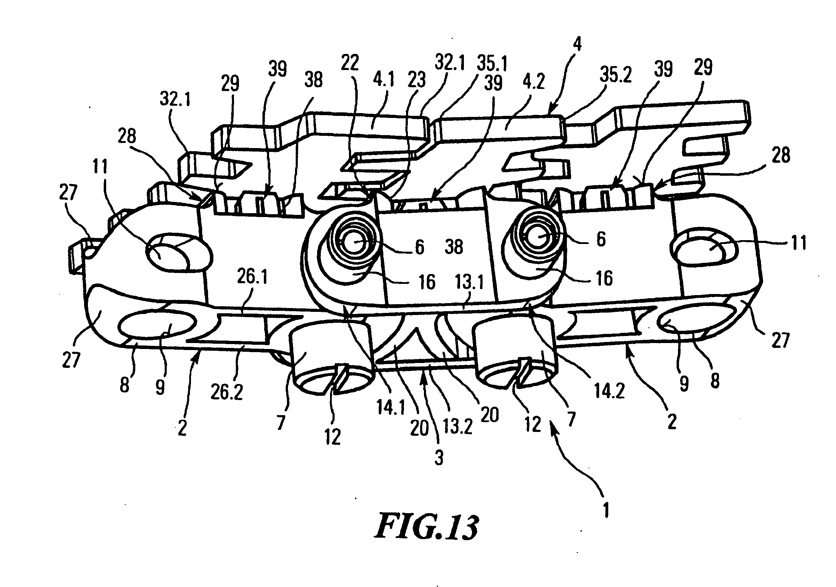

Anhand der Fig. 13 bis 15 wird nunmehr eine zweite Ausführungsform einer erfindungsgemäßen Seitenbogenförderkette 1 erläutert.

Es wird nur auf die wesentlichen Unterschiede eingegangen, weshalb für gleiche und wirkungsgleiche Bauelemente unter Verwendung derselben Bezugsziffern auf die Beschreibung des obigen ersten Ausführungsbeispiels verwiesen wird.

Ein Unterschied besteht darin, dass der Gelenkzapfen 7 länger ausgestaltet ist und über die Unterkanten der Innenkettenglieder 2 und Außenkettenglieder 3 übersteht. Hierdurch kann die Kette im Seitenbogen von einem z.B. horizontal laufenden Kettenrad (nicht dargestellt) geführt werden, dessen Zähne in die Lücken zwischen den vorstehenden Enden der Gelenkzapfen 7 eingreifen.

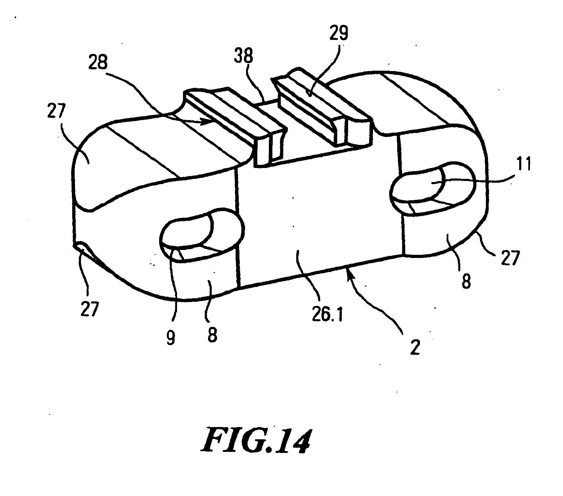

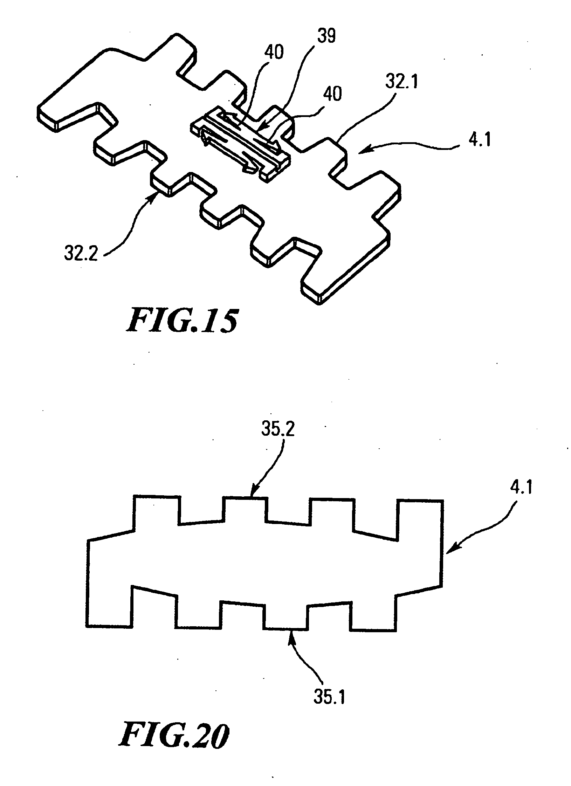

Ein weiterer Unterschied besteht in der Anbringung der Tragplatten, von denen nur die Tragplatte 4.1 für das Innenkettenglied 2 in Fig. 15 dargestellt ist. Das in den Fig. 13 und 14 dargestellte Innenkettenglied 2 weist wieder eine erhöhte Deckplatte 28 auf, die diesmal mit einer Rastnut 38 versehen ist. Die Rastnut 38 ist hinterschnitten und erstreckt sich nicht über die gesamte Breite des Innenkettengliedes 2.

Die Tragplatte 4.1 weist auf ihrer Unterseite eine an die Rastnut 38 angepasste Rasteinrichtung 39 auf, die als Nutstein in die Rastnut 38 seitlich einschiebbar ist. Rasthaken 40 verrasten sich an den Endabschnitten der Rastnut 38 und sichern die Tragplatte 4.1 gegen weiters seitliches Verschieben.

Bei dieser Ausführungsform weist das Außenkettenglied 3 ebenfalls eine entsprechend ausgestaltete Deckplatte 22 mit einer nicht näher dargestellten Rastnut auf. Die Tragplatte 4.2 kann identisch zu der in Fig. 15 dargestellten Tagplatte 4.1 ausgestaltet und in die Rastnut der Deckplatte 22 des Außenkettenglieds 3 eingeschoben und verrastet werden.

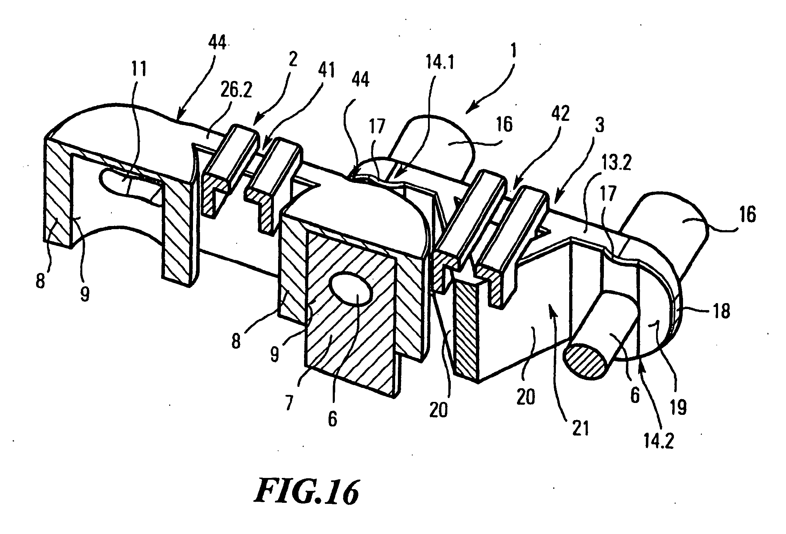

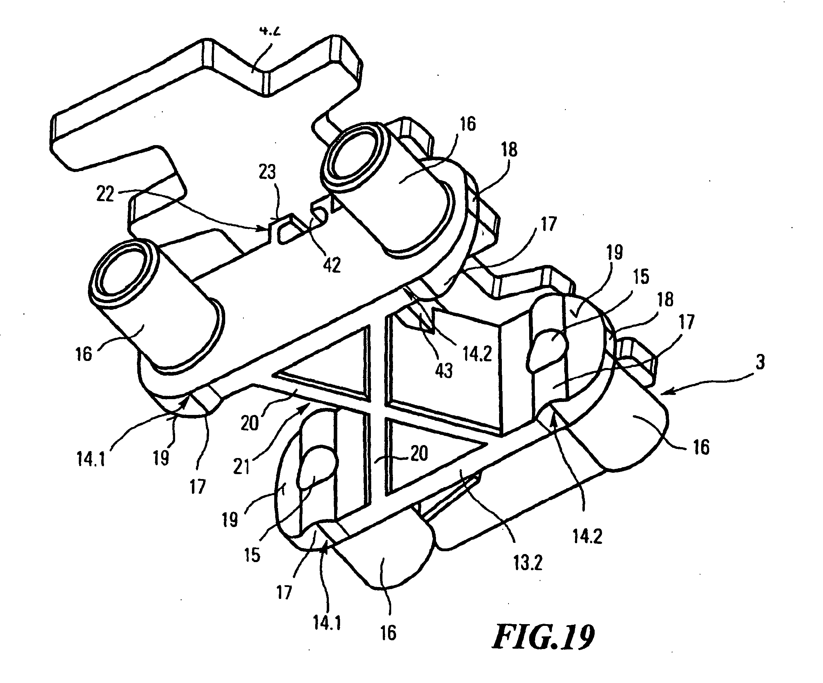

Im Folgenden wird nunmehr anhand der Fig. 16 bis 19 eine dritte Ausführungsform einer erfindungsgemäßen Seitenbogenförderkette 1 näher erläutert.

Es wird nur auf die wesentlichen Unterschiede zu dem ersten Ausführungsbeispiel näher eingegangen. Für gleiche und wirkungsgleiche Elemente wird unter Verwendung identischer Bezugsziffern auf die Beschreibung des ersten Ausführungsbeispiels verwiesen.

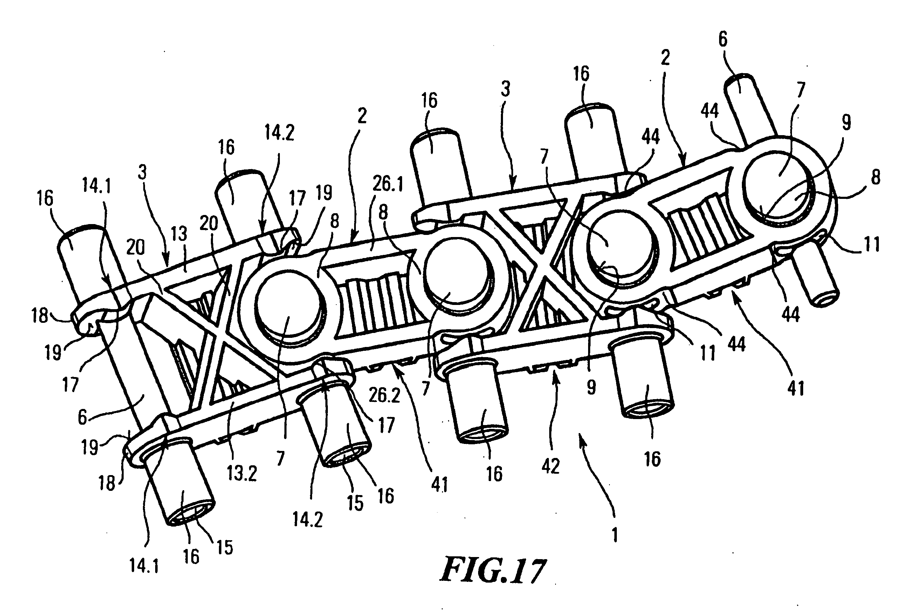

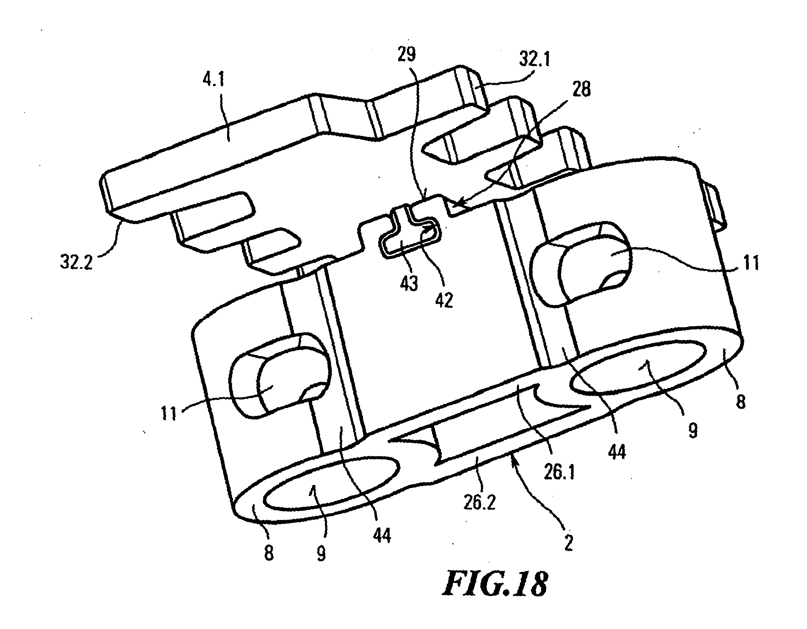

Ein wesentlicher Unterschied besteht darin, dass das Innenkettenglied 2 eine weniger abgerundete Aufnahmehülse 8 aufweist, wodurch ein größerer Abstand zu den gradlinig ausgestalteten Querstegen 20 eingehalten werden muss. Die Querstege 20 bilden in diesem Ausführungsbeispiel ein X (siehe insbesondere Fig. 17). Auch bei diesem Ausführungsbeispiel steht der Gelenkzapfen 7 nach unten über, so dass er mit einem horizontal verlaufenden Kettenrad (nicht dargestellt) in Eingriff kommen kann. Auf der Oberseite weisen beide Kettenglieder 2 und 3 eine hinterschnittene Nutführung 41 und 42 auf. In diese Nutführungen lassen sich Tragplatten 4.1 und 4.2 seitlich einschieben, die einen nach unten vorstehenden an den Querschnitt der Nutführung 41 und 42 angepassten Nutstein 43 aufweisen, wie er exemplarisch für die Tragplatte 4.1 in Fig. 18 dargestellt ist.

Der Zentriervorsprung 17 ist bei diesem Ausführungsbeispiel wulstförmig und somit prägnanter ausgeformt. Im vorderen Bereich werden die an den Zentriervorsprung 17 angrenzenden Trichterflächen 19 beibehalten.

Beim Innenkettenglied 2 sind die Außenseiten der Innenlaschen 26.1 und 26.2 eigentlich tangential an den Außenmantel der Aufnahmehülsen 8 herangeführt. Allerdings ist im Übergangsbereich der Innenlaschen 26.1 und 26.2 eine von oben nach unten laufende Längsnut 44 eingeformt, deren Querschnitt im wesentlichen dem Querschnitt des wulstförmigen Zentriervorsprungs 17 entspricht.

Anhand der Fig. 17 ist zu erkennen, wie der wulstförmige Zentriervorsprung 17 bei einem Seitenbogen von der Längsnut 44 aufgenommen wird, wodurch im Zusammenspiel mit den Trichterflächen 19 sich eine größere Schwenkbarkeit um die Achse A₂ ergibt. Auch bei dieser Ausführungsform sind das Außenkettenglied 3 und das Innenkettenglied 2 sowie der Gelenkzapfen 7 aus einem Kunststoffmaterial hergestellt, während der Gelenkbolzen 6 aus einem Stahlwerkstoff besteht.

In Fig. 20 ist eine alternative Ausgestaltung einer Tragplattenkontur dargestellt. Die vordere und hintere Verzahnung 32.1 und 32.2 sind punktsymmetrisch zueinander ausgestaltet, so dass diese in jede Richtung eingebaut werden kann und somit das Plattenband keine Vorzugsrichtung aufweist.

Die Verwendung von Innenkettengliedern 2 und Außenkettengliedern 3 führt Verwendung des um die zwei Achsen A₁ und A₂ schwenkbaren Kettengelenks 5 zu einer stabileren Ausgestaltung, da möglichst geschlossene Formen verwendet werden. Zu dieser geschlossenen Form trägt auch die parallele hochkante Ausrichtung der Innen- und Außenlaschen bei.

## Patentansprüche

1. Seitenbogenförderkette (1), deren Kettenglieder (2,3) jeweils mittels eines um eine erste und eine zweite Achse (A₁,A₂) schwenkbaren Kettengelenks (5) miteinander verbunden sind, das einen entlang der ersten Achse (A₁) angeordneten Gelenkbolzen (6), einen entlang der zweiten Achse (A₂) angeordneten Gelenkzapfen (7), durch den sich der Gelenkbolzen (6) erstreckt, und eine entlang der zweiten Achse (A₂) angeordnete Aufnahmehülse (8), in der der Gelenkzapfen (7) relativ zur Aufnahmehülse (8) um die zweite Achse (A₂) schwenkbar ist, umfasst, wobei die Aufnahmehülse (8) seitliche Schwenköffnungen (11) zum Durchtritt des Gelenkbolzens (6) aufweist, **dadurch gekennzeichnet, dass** sich abwechselnde Innen- und Außenkettenglieder (2,3) vorgesehen sind, ein Innenkettenglied (2) jeweils an seinen beiden Enden eine Aufnahmehülse (8) und mindestens eine diese miteinander verbindende Innenlasche (26.1,26.2) aufweist, ein Außenkettenglied (3) jeweils an seinen beiden Enden einen Gelenkbolzen (6) und einen Gelenkzapfen (7) und mindestens zwei diese miteinander verbindende Außenlaschen (13.1,13.2) aufweist, die mindestens zwei Außenlaschen (13.1,13.2) an ihren Stirnenden jeweils eine Aufnahmehülse (8) eines benachbarten Innenkettengliedes (2) seitlich umfassen, und die hochkant ausgerichteten Innen- und Außenlaschen (26.1,26.2;13.1,13.2) beim Geradeauslauf der Kette senkrecht zu der ersten Achse (A₁) angeordnet sind.

2. Seitenbogenförderkette (1) nach Anspruch 1, **dadurch gekennzeichnet, dass** zumindest die Innenlaschen (26.1,26.2) und die Außenlaschen (13.1,13.2) der Innen- und Außenkettenglieder (2,3) aus einem Kunststoffmaterial, bevorzugt hochfestem Kunststoffmaterial, hergestellt sind.

3. Seitenbogenförderkette (1) nach Anspruch 1 oder 2, **dadurch gekennzeichnet, dass** die mindestens eine Innenlasche (26.1,26.2) und die beiden Aufnahmehülsen (8) eines Innenkettengliedes (2) einteilig aus einem Kunststoffmaterial hergestellt sind.

4. Seitenbogenförderkette (1) nach einem der vorangegangenen Ansprüche, **dadurch gekennzeichnet, dass** die Gelenkzapfen (7) eine untere Stirnfläche der Aufnahmehülsen (8) überragen.

5. Seitenbogenförderkette (1) nach einem der vorangegangenen Ansprüche, **dadurch gekennzeichnet, dass** die Aufnahmehülsen (8) am oberen Ende geschlossen und somit topfförmig ausgebildet sind.

6. Seitenbogenförderkette (1) nach einem der vorangegangenen Ansprüche, **dadurch gekennzeichnet, dass** die Außenlaschen (13.1,13.2) auf ihrer Innenseite eine den Gelenkbolzen (6) zumindest bereichsweise umgebende Zentriererhöhung (17) aufweisen, und der Abstand (A_{z}) zweier gegenüberliegender Zentriererhöhungen im wesentlichen der Breite (B_{A}) der dazwischen angeordneten Aufnahmehülse (8) entspricht.

7. Seitenbogenförderkette (1) nach Anspruch 6, **dadurch gekennzeichnet, dass** eine Längsmittellinie (M_{z}) der Zentriererhöhung (17) in einer Ebene verläuft, die im wesentlichen senkrecht zu einer Längsmittellinie (M_{A}) des Außenkettengliedes (3) ausgerichtet ist und durch die die erste Achse (A₁) verlauft, wobei die Zentriererhöhung (17) sich über mindestens 50 % der Laschenhöhe der Innenlasche (26.1.,26.2) erstreckt.

8. Seitenbogenförderkette (1) nach Anspruch 6 oder 7, **dadurch gekennzeichnet, dass** eine Außenfläche der mindestens einen Innenlasche (26.1.,26.2) eines Innenkettengliedes (2) im wesentlichen tangential zur Außenmantelfläche der Aufnahmehülse (8) ausgerichtet ist, wobei im Übergangsbereich eine Längsnut (44) vorgesehen ist, die im wesentlichen senkrecht zu der ersten Achse (A₁) und einer Längsachse (Mᵢ) des Innenkettengliedes (2) verläuft und einen dem Querschnitt der Zentriererhöhung (17) angepassten Nutquerschnitt aufweist.

9. Seitenbogenförderkette (1) nach Anspruch 6 oder 7, **dadurch gekennzeichnet, dass** ein Abstand (A₁) einer Außenfläche der mindestens einen Innenlasche (26.1,26.2) eines Innenkettengliedes (2) zur Längsmittellinie (Mᵢ) des Innenkettengliedes (2) kleiner ist als die halbe Breite (B_{A}) der Aufnahmehülse (8).

10. Seitenbogenförderkette (1) nach einem der vorangegangenen Ansprüche, **dadurch gekennzeichnet, dass** sich der Abstand der Innenflächen der mindestens zwei Außenlaschen (13.1,13.2) zwischen dem Gelenkbolzen (6) und dem Stirnende der Außenlaschen (13.1.13.2) fortlaufend vergrößert.

11. Seitenbogenförderkette (1) nach Anspruch 10, **dadurch gekennzeichnet, dass** sich die beiden Innenflächenabschnitte (19) an den Stirnenden der mindestens zwei Außenlaschen (13.1,13.2) in einem Winkelbereich (α) von 15° bis 45° zueinander öffnen.

12. Seitenbogenförderkette (1) nach einem der vorangegangenen Ansprüche, **dadurch gekennzeichnet, dass** die mindestens zwei Außenlaschen (13.1,13.2) des Außenkettengliedes (3) mittels mindestens einem zwischen den Aufnahmehülsen (8) benachbarter Innenkettenglieder (2) verlaufenden Quersteg (20) verbunden sind.

13. Seitenbogenförderkette (1) nach Anspruch 12, **dadurch gekennzeichnet, dass** mehrere Querstege (20) vorgesehen sind, die die Stirnenden der benachbarten Innenkettenglieder (2) zumindest teilweise umfassen und somit Aufnahmebuchten (21) für die Aufnahmehülsen (8) formen.

14. Seitenbogenförderkette (1) nach einem der vorangegangenen Ansprüche, **dadurch gekennzeichnet, dass** die Außenlaschen (13.1,13.2) an den Außenseiten vorstehende hülsenförmige Vorsprünge (16) zum Aufnehmen der Gelenkbolzenenden aufweisen.

15. Seitenbogenförderkette (1) nach einem der vorangegangenen Ansprüche, **dadurch gekennzeichnet, dass** die Endabschnitte der Außenlaschen (13.1,13.2) zumindest im Bereich der Gelenkbolzen (6) verstärkt ausgebildet sind.

16. Seitenbogenförderkette (1) nach einem der vorangegangenen Ansprüche, **dadurch gekennzeichnet, dass** die Aufnahmehülsen (8) in einer Ebene, die senkrecht zur Längsmittellinie (Mᵢ) des Innenkettengliedes (2) und längs der zweiten Achse (A₂) verläuft, eine größere Wandstärke (W₁) aufweisen als um 90° um die zweite Achse (A₂) gedreht dazu.

17. Seitenbogenförderkette (1) nach einem der vorangegangenen Ansprüche, **dadurch gekennzeichnet, dass** ein Plattenband (4) aus einzelnen Tragplatten (4.1,4.2) vorgesehen ist und die Tragplatten (4.1,4.2) mit den Außen- und/oder Innenkettengliedem (2,3) verbunden sind.

18. Seitenbogenförderkette (1) nach Anspruch 17, **dadurch gekennzeichnet, dass** die Tragplatten (4.1,4.2) mittels Rasteinrichtungen (25,34;31,37;38,39) mit den Außen- und/oder Innenkettengliedem (2,3) verbunden sind.

19. Seitenbogenförderkette (1) nach Anspruch 17 oder 18, **dadurch gekennzeichnet, dass** die Tragplatten (4.1,4.2) verzahnt ineinandergreifen und die Kontur einer Tragplatte (4.1,4.2) im wesentlichen punktsymmetrisch ausgestaltet ist.

20. Seitenbogenförderkette (1) nach Anspruch 18 oder 19, **dadurch gekennzeichnet, dass** die Innenkettengleider (2) und/oder die Außenkettenglieder (3) eine Steckaufnahme (24,30) aufweisen, in die jeweils ein Steckvorsprung (33,36) einer zugehörigen Tragplatte (4.1,4.2) formschlüssig eingreift und mittels der zusätzlichen Rasteinrichtungen gesichert ist.

## Claims

1. A side bow conveyor chain (1) whose respective chain links (2, 3) are interconnected by a chain hinge (5) which is adapted to be pivoted about a first and a second axis (A₁, A₂), said chain hinge (5) comprising a pivot bolt (6) which is arranged along said first axis (A₁), a pivot pin (7) which is arranged along said second axis (A₂) and through which the pivot bolt (6) extends, and a reception sleeve (8), which extends along the second axis (A₂) and in which the pivot pin (7) is pivotable relative to the reception sleeve (8) about said second axis (A₂), said reception sleeve (8) being provided with lateral pivot openings (11) which allow the pivot bolt (6) to pass through, **characterized in that** inner and outer chain links (2, 3) are provided in alternating succession, that an inner chain link (2) comprise a reception sleeve (8) on either end thereof and at least one inner link plate (26.1, 26.2) interconnecting said reception sleeves (8), that an outer chain link (3) comprises a pivot bolt (6) and a pivot pin (7) on either end thereof and at least two outer link plates (13.1, 13.2) interconnecting the same, that the end faces of the at least two outer link plates (13.1, 13.2) laterally encompass a reception sleeve (8) of a neighbouring inner chain link (2), and that the inner and outer link plates (26.1, 26.2; 13.1, 13.2), which are arranged such that they are set up on edge, extend vertically to the first axis (A₁) when the chain moves straight ahead.

2. A side bow conveyor chain (1) according to claim 1, **characterized in that** at least the inner link plates (26.1, 26.2) and the outer link plates (13.1, 13.2) of the inner and outer chain links (2, 3) are produced from a plastic material, preferably from a high-strength plastic material.

3. A side bow conveyor chain (1) according to claim 1 or 2, **characterized in that** the at least one inner link plate (26.1, 26.2) and the two reception sleeves (8) of an inner chain link (2) are produced from a plastic material in the form of an integral component.

4. A side bow conveyor chain (1) according to one of the preceding claims, **characterized in that** the pivot pins (7) project beyond a lower end face of the reception sleeves (8).

5. A side bow conveyor chain (1) according to one of the preceding claims, **characterized in that** the reception sleeves (8) are implemented such that they are closed at the upper end thereof and have thus a cup-shaped structural design.

6. A side bow conveyor chain (1) according to one of the preceding claims, **characterized in that** the outer link plates (13.1, 13.2) have on the inner side thereof a centering projection (17) encompassing the pivot bolt (6) at least in certain areas thereof, and that the distance (A_{Z}) between two opposed centering projections corresponds essentially to the width (B_{A}) of the sleeve (8) arranged therebetween.

7. A side bow conveyor chain (1) according to claim 6, **characterized in that** a longitudinal center line (M_{Z}) of the centering projection (17) extends in a plane which is oriented essentially at right angles to a longitudinal center line (M_{A}) of the outer chain link (3) and through which the first axis (A₁) extends, the centering projection (17) extending over at least 50 % of the height of the inner link plate (26.1, 26.2).

8. A side bow conveyor chain (1) according to claim 6 or 7, **characterized in that** an outer surface of the at least one inner link plate (26.1, 26.2) of an inner chain link (2) is oriented essentially tangentially to the outer circumferential surface of the reception sleeve (8), the transition region having formed therein a longitudinal groove (44) which extends essentially at right angles to the first axis (A₁) and a longitudinal axis (Mᵢ) of the inner chain link (2) and which has a cross-section that is adapted to the cross-section of the centering projection (17).

9. A side bow conveyor chain (1) according to claim 6 or 7, **characterized in that** the distance (Aᵢ) between an outer surface of the at least one inner link plate (26.1, 26.2) of an inner chain link (2) and the longitudinal center line (Mᵢ) of the inner chain link (2) is smaller than half the width (B_{A}) of the reception sleeve (8).

10. A side bow conveyor chain (1) according to one of the preceding claims, **characterized in that** the distance between the inner surfaces of the at least two outer link plates (13.1, 13.2) increases continuously between the pivot bolt (6) and the end face of the outer link plates (13.1, 13.2).

11. A side bow conveyor chain (1) according to claim 10, **characterized in that** the two inner surface sections (19) at the end faces of the at least two outer link plates (13.1, 13.2) open relative to one another in an angular range (α) of from 15° to 45°.

12. A side bow conveyor chain (1) according to one of the preceding claims, **characterized in that** at least two outer link plates (13.1, 13.2) of the outer chain link (3) are interconnected by means of at least one cross web (20) extending between the reception sleeves (8) of neighbouring inner chain links (2).

13. A side bow conveyor chain (1) according to claim 12, **characterized in that** a plurality of cross webs (20) is provided, said cross webs (20) encompassing the end faces of the neighbouring inner chain links (2) at least partially, thus defining reception bays (21) for the reception sleeves (8).

14. A side bow conveyor chain (1) according to one of the preceding claims, **characterized in that** the outer sides of the outer link plates (13.1, 13.2) have provided thereon sleevelike projections (16) for accommodating the pivot bolt ends.

15. A side bow conveyor chain (1) according to one of the preceding claims, **characterized in that** the end portions of the outer link plates (13.1, 13.2) are reinforced at least in the area of the pivot bolts (6).

16. A side bow conveyor chain (1) according to one of the preceding claims, **characterized in that** in a plane extending at right angles to the longitudinal center line (Mᵢ) of the inner chain link (2) and along the second axis (A₂), the reception sleeves (8) have a wall thickness (W₁) which exceeds the wall thickness in a plane rotated by 90° about the second axis (A₂).

17. A side bow conveyor chain (1) according to one of the preceding claims, **characterized in that** a plate belt (4) consisting of individual support plates (4.1, 4.2) is provided, and that the support plates (4.1, 4.2) are connected to the outer and/or inner chain links (2, 3).

18. A side bow conveyor chain (1) according to claim 17, **characterized in that** the support plates (4.1, 4.2) are connected to the outer and/or inner chain links (2, 3) by means of detent units (25, 34; 31, 37; 38, 39).

19. A side bow conveyor chain (1) according to claim 17 or 18, **characterized in that** the support plates (4.1, 4.2) are in toothed engagement with one another and that the contour of a support plate (4.1, 4.2) is essentially point symmetric.

20. A side bow conveyor chain (1) according to claim 18 or 19, **characterized in that** the inner chain links (2) and/or the outer chain links (3) are provided with plug-in reception means (24, 30), a plug-in projection (33, 36) of a respective associated support plate (4.1, 4.2) being in positive engagement with said plug-in reception means (24, 30) and being secured in position by means of the additional detent units.

## Revendications

1. Chaîne transporteuse (1) à flexion latérale, dont les maillons de chaîne (2, 3) sont respectivement reliés les uns aux autres au moyen d'une articulation de chaîne (5) pivotable autour d'un premier et d'un deuxième axe (A₁, A₂) et qui comprend une tige d'articulation (6) disposée le long du premier axe (A₁), un tourillon d'articulation (7), disposé le long du deuxième axe (A₂) et à travers lequel s'étend la tige d'articulation (6), et une douille de réception (8), disposée le long du deuxième axe (A₂) et dans laquelle le tourillon d'articulation (7) est pivotable autour du deuxième axe (A₂) par rapport à la douille de réception (8), la douille de réception (8) présentant des ouvertures de pivotement latérales (11) pour le passage du la tige d'articulation (6), **caractérisée en ce qu'**il est prévu une alternance de maillons de chaîne intérieurs et extérieurs (2, 3), **en ce qu'**un maillon de chaîne intérieur (2) présente une douille de réception (8) à chacune de ses deux extrémités et au moins une éclisse intérieure (26.1, 26.2) reliant ces douilles entre elles, **en ce qu'**un maillon de chaîne extérieur (3) présente une tige d'articulation (6) et un tourillon d'articulation (7) à chacune de ses deux extrémités et au moins deux éclisses extérieures (13.1, 13.2) reliant celles-ci entre elles, **en ce que** les au moins deux éclisses extérieures (13.1, 13.2) entourent chacune latéralement, à leurs extrémités frontales, une douille de réception (8) d'un maillon de chaîne intérieur voisin (2), et **en ce que** les éclisses intérieures et extérieures (26.1, 26.2 ; 13.1, 13.2) placées de chant sont disposées perpendiculairement au premier axe (A₁) lors de la marche en ligne droite de la chaîne.

2. Chaîne transporteuse (1) à flexion latérale selon la revendication 1, **caractérisée en ce qu'**au moins les éclisses intérieures (26.1, 26.2) et les éclisses extérieures (13.1, 13.2) des maillons de chaîne intérieurs et extérieurs (2, 3) sont fabriquées en matière plastique, de préférence en matière plastique à haute résistance.

3. Chaîne transporteuse (1) à flexion latérale selon la revendication 1 ou 2, **caractérisée en ce que** la au moins une éclisse intérieure (26.1, 26.2) et les deux douilles de réception (8) d'un maillon de chaîne intérieur (2) sont fabriquées d'un seul tenant en matière plastique.

4. Chaîne transporteuse (1) à flexion latérale selon l'une des revendications précédentes, **caractérisée en ce que** les tourillons d'articulation (7) font saillie au-delà d'une face frontale inférieure des douilles de réception (8).

5. Chaîne transporteuse (1) à flexion latérale selon l'une des revendications précédentes, **caractérisée en ce que** les douilles de réception (8) sont fermées à leur extrémité supérieure et donc réalisées en forme de pot.

6. Chaîne transporteuse (1) à flexion latérale selon l'une des revendications précédentes, **caractérisée en ce que** les éclisses extérieures (13.1, 13.2) présentent sur leur côté intérieur un bossage de centrage (17) entourant au moins partiellement la tige d'articulation (6), et la distance (A_{Z}) entre deux bossages de centrage opposés correspond sensiblement à la largeur (B_{A}) de la douille de réception (8) disposée entre les deux.

7. Chaîne transporteuse (1) à flexion latérale selon la revendication 6, **caractérisée en ce qu'**un axe médian longitudinal (M_{Z}) du bossage de centrage (17) s'étend dans un plan qui est orienté sensiblement perpendiculairement à un axe médian longitudinal (M_{A}) du maillon de chaîne extérieur (3) et par lequel passe le premier axe (A₁), le bossage de centrage (17) s'étendant sur au moins 50% de la hauteur de l'éclisse intérieure (26.1, 26.2).

8. Chaîne transporteuse (1) à flexion latérale selon la revendication 6 ou 7, **caractérisée en ce qu'**une surface extérieure de l'au moins une éclisse intérieure (26.1, 26.2) d'un maillon de chaîne intérieur (2) est orientée sensiblement tangentiellement à la surface périphérique extérieure de la douille de réception (8), une rainure longitudinale (44) étant prévue dans la région de transition, la rainure longitudinale (44) s'étendant essentiellement perpendiculairement au premier axe (A₁) et à un axe longitudinal (Mᵢ) du maillon de chaîne intérieur (2) et présentant une section de rainure adaptée à la section du bossage de centrage (17).

9. Chaîne transporteuse (1) à flexion latérale selon la revendication 6 ou 7, **caractérisée en ce que** la distance (Aᵢ) entre une surface extérieure de la au moins une éclisse intérieure (26.1, 26.2) d'un maillon de chaîne intérieur (2) et l'axe médian longitudinal (Mᵢ) du maillon de chaîne intérieur (2) est inférieure à la moitié de la largeur (B_{A}) de la douille de réception (8).

10. Chaîne transporteuse (1) à flexion latérale selon l'une des revendications précédentes, **caractérisée en ce que** la distance entre les surfaces intérieures des au moins deux éclisses extérieures (13.1, 13.2) augmente continûment entre la tige d'articulation (6) et l'extrémité frontale des éclisses extérieures (13.1, 13.2).

11. Chaîne transporteuse (1) à flexion latérale selon la revendication 10, **caractérisée en ce que** les deux parties (19) de surface intérieure aux extrémités frontales des au moins deux éclisses extérieures (13.1, 13.2) s'ouvrent l'une vers l'autre dans une plage d'angle (α) de 15° à 45°.

12. Chaîne transporteuse (1) à flexion latérale selon l'une des revendications précédentes, **caractérisée en ce que** les au moins deux éclisses extérieures (13.1, 13.2) du maillon de chaîne extérieur (3) sont reliées au moyen d'au moins une entretoise transversale (20) s'étendant entre les douilles de réception (8) de maillons de chaîne intérieurs voisins (2).

13. Chaîne transporteuse (1) à flexion latérale selon la revendication 12, **caractérisée en ce qu'**il est prévu plusieurs entretoises transversales (20), qui entourent au moins partiellement les extrémités frontales des maillons de chaîne intérieurs voisins (2) et forment ainsi des baies de réception (21) pour les douilles de réception (8).

14. Chaîne transporteuse (1) à flexion latérale selon l'une des revendications précédentes, **caractérisée en ce que** les éclisses extérieures (13.1, 13.2) présentent des saillies en forme de douille (16), dépassant sur leur côté extérieur et destinées à recevoir les extrémités de la tige d'articulation.

15. Chaîne transporteuse (1) à flexion latérale selon l'une des revendications précédentes, **caractérisée en ce que** les parties terminales des éclisses extérieures (13.1, 13.2) sont réalisées de manière renforcée au moins dans la région des tiges d'articulation (6).

16. Chaîne transporteuse (1) à flexion latérale selon l'une des revendications précédentes, **caractérisée en ce que** les douilles de réception (8) présentent, dans un plan qui s'étend perpendiculairement à l'axe médian longitudinal (Mᵢ) du maillon de chaîne intérieur (2) et le long du deuxième axe (A₂), une épaisseur de paroi (W₁) plus grande que dans un plan tourné, par rapport audit plan, de 90° autour du deuxième axe (A₂).

17. Chaîne transporteuse (1) à flexion latérale selon l'une des revendications précédentes, **caractérisée en ce qu'**il est prévu une bande transporteuse (4) à tabliers, constituée de tabliers porteurs individuels (4.1, 4.2), et les tabliers porteurs (4.1, 4.2) sont reliés aux maillons de chaîne intérieurs et /ou extérieurs (2, 3).

18. Chaîne transporteuse (1) à flexion latérale selon la revendication 17, **caractérisée en ce que** les tabliers porteurs (4.1, 4.2) sont reliés aux maillons de chaîne intérieurs et/ou extérieurs (2, 3) par l'intermédiaire de moyens d'enclenchement (25, 34 ; 31, 37 ; 38, 39).

19. Chaîne transporteuse (1) à flexion latérale selon la revendication 17 ou 18, **caractérisée en ce que** les tabliers porteurs (4.1, 4.2) sont en engagement mutuel denté, et le contour d'un tablier porteur (4.1, 4.2) est réalisé essentiellement à symétrie ponctuelle.

20. Chaîne transporteuse (1) à flexion latérale selon la revendication 18 ou 19, **caractérisée en ce que** les maillons de chaîne intérieurs (2) et/ou les maillons de chaîne extérieurs (3) présentent un logement d'emboîtement (24, 30), dans lequel une saillie d'emboîtement (33, 36) d'un tablier porteur associé (4.1, 4.2) s'engage respectivement par complémentarité de forme, et est assujettie à l'aide des moyens d'enclenchement supplémentaires.
